(19) Europäisches Patentamt / European Patent Office / Office européen des brevets

(11) **EP 4 456 211 A2**

(12) **EUROPEAN PATENT APPLICATION**

(43) Date of publication:
**30.10.2024   Bulletin 2024/44**

(21) Application number: **24152570.8**

(22) Date of filing: **18.01.2024**

(51) International Patent Classification (IPC):
**H01M 8/023** (2016.01)    **H01M 8/0273** (2016.01)
**H01M 8/028** (2016.01)    **H01M 8/04746** (2016.01)
**H01M 8/2432** (2016.01)    **H01M 8/247** (2016.01)
**H01M 8/12** (2016.01)

(52) Cooperative Patent Classification (CPC):
**H01M 8/04746; H01M 8/023; H01M 8/0273;**
**H01M 8/028; H01M 8/2432; H01M 8/247;**
H01M 2008/1293

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority:  **17.03.2023   JP 2023043298**

(71) Applicants:
• **Kabushiki Kaisha Toshiba**
  **Tokyo 105-0023 (JP)**
• **Toshiba Energy Systems & Solutions**
  **Corporation**
  **Saiwai-ku**
  **Kawasaki-shi**
  **Kanagawa (JP)**

(72) Inventors:
• **ONO, Takahiro**
  **Kawasaki-shi, Kanagawa, (JP)**
• **YOSHINO, Masato**
  **Kawasaki-shi, Kanagawa, (JP)**
• **MATSUNAGA, Kentaro**
  **Kawasaki-shi, Kanagawa, (JP)**
• **OSADA, Norikazu**
  **Kawasaki-shi, Kanagawa, (JP)**

(74) Representative: **Hoffmann Eitle**
**Patent- und Rechtsanwälte PartmbB**
**Arabellastraße 30**
**81925 München (DE)**

(54) **ELECTROCHEMICAL CELL, CURRENT COLLECTOR, AND CELL STACK**

(57)    According to one embodiment, an electrochemical cell 1 includes: an electrode layered body 10 having an electrolyte 10e having a first surface 10e1 and a second surface 10e2 positioned opposite to the first surface 10e1, a cathode 10c in contact with the first surface 10e1, and an anode 10a in contact with the second surface 10e2; and a gas-flow suppression part 20 that is positioned at least partially adjacent to a side surface of the electrode layered body 10, and is formed from a material different from those of the electrolyte 10e, the cathode 10c, and the anode 10a.

FIG. 2

EP 4 456 211 A2

**Description**

Field

The embodiments described herein relate to an electrochemical cell, a current collector, and a cell stack.

CROSS REFERENCE TO RELATED APPLICATION

This application is based upon and claims the benefit of priority from the prior Japanese Patent Application No. 2023-43298 filed on March 17, 2023, the entire contents of which are incorporated herein by reference.

Background Art

There are various types of electrochemical cells, such as a sold polymer type, a solid oxide type, etc. Since a solid oxide electrochemical cell uses a solid oxide as an electrolyte, its operation temperature is high (e.g., 600 to 1000 °C). Due to an operation at such a high operation temperature, the sold oxide electrochemical cell provides a high reaction rate without the use of expensive noble metal catalyst.

The above high reaction rate enables high power generation efficiency when the solid oxide electrochemical cell is operated as a fuel cell (solid oxide fuel cell: SOFC). When the solid oxide electrochemical cell is operated as an electrolytic cell (solid oxide electrolytic cell: SOEC), hydrogen, for example, can be manufactured efficiently at a low electrolytic voltage. Thus, the solid oxide electrochemical cell has attracted attention as a technology for realizing a highly efficient fuel cell, an electrolytic cell for manufacturing hydrogen, a power storage system combining them, etc.

The electrochemical cell comprises a layered body (hereinafter sometimes referred to as electrode layered body) including at least an air electrode, an electrolyte, and a fuel electrode. The air electrode, the electrolyte, and the fuel electrode are generally formed from materials having different properties from each other. The air electrode and the fuel electrode are electrical conductors and are generally formed from porous materials. Different gases are supplied respectively to the air electrode and the fuel electrode, with the electrolyte therebetween. On the other hand, the electrolyte is an ion conductor.

Electrochemical cell shapes may be a flat plate shape, a cylindrical shape, a cylindrical-plate shape, etc. For example, in an electrochemical cell having a flat plate shape, the air electrode, the electrolyte, the fuel electrode, etc. are stacked like flat plates.

A structure that integrates a plurality of electrochemical cells in order to generate a large amount of power or hydrogen is generally referred to as cell stack. For example, in a cell stack including a plurality of electrochemical cells having a flat plate shape, the electrochemical cells are stacked in their respective thickness directions. Corresponding gases are supplied to the air electrode and the fuel electrode of each electrochemical cell. The respective electrochemical cells are electrically connected in series. The electrochemical cell constituting the cell stack generally comprises a separator. In the cell stack, an electrochemical cell is stacked on another electrochemical cell such that its separator and the other electrochemical cell are in contact with each other. In such a structure, gas channels of the respective electrochemical cells are separated by the separator. The separator is electrically conductive, and thus conducts electricity to other electrochemical cells.

The aforementioned separator may delimit a gas channel for any of the air electrode and the fuel electrode, by, for example, a plate-shaped base part in contact with the electrode layered body in a stacking direction (thickness direction) of the electrochemical cell, and a frame body surrounding a circumference of the electrode layered body. In the separator having such a structure, the frame body may have a gas supply channel and a gas discharge channel. In this case, a gas having flown into the frame body from the supply channel is supplied to the air electrode or the fuel electrode in the electrochemical cell, and the gas having passed through the air electrode or the fuel electrode is discharged outside from the discharge channel.

For example, a gas utilization rate is used as an indicator for evaluating performance of the cell stack as described above. In an electrolysis mode where hydrogen is generated, an amount of hydrogen produced per unit of electric power is important.

Some of the gas supplied to the electrochemical cell may be discharged without passing through a reaction zone (air electrode / fuel electrode in electrode layered body) of the electrochemical cell. Specifically, there may be a gas that flows bypassing the reaction zone, and/or a gas that leaks from the reaction zone to the outside thereof.

However, the gas flow that does not pass through the reaction zone does not contribute to the reaction. Thus, it is desirable to ensure gas sealability to prevent a gas from bypassing the reaction zone and a gas from leaking from the reaction zone. It is also desirable that the suitable gas sealability allows the gas to flow such that reactions at the air electrode and the fuel electrode can be carried out efficiently.

As described above, when the frame body surrounding the circumference of the electrode layered body is provided, a gap may be formed between ethe electrode layered body and the frame body. In this case, there may be a gas that is going to bypass the reaction zone through this gap. The flow of gas through the gap can be suppressed by tightly contacting the electrode layered body and the frame body to each other. However, it is sometimes difficult to tightly contact the electrode layered body and the frame body property, because of variations in dimensional processing accuracy of the electrode layered body and the frame body. In addition, the electrode layered body and the frame body may expand to mutually interfere with each other when a temperature rises, which applies pressure to a contact surface between the electrode layered body and the frame body during operation at a high temperature. In this case, unwanted internal stress and/or deformation may occur in the electrochemical cell. If the pressure on the contact surface becomes excessively large, the electrochemical cell may be damaged, so that power generation performance or electrolysis performance may be severely impaired.

In view of the above circumstances, it is sometimes necessary to provide a gap between the electrode layered body and the fame body in the electrochemical cell. Particularly when a solid oxide electrochemical cell is used, mutual interference upon expansion is often a problem because of its high operation temperature. In addition, dimensional processing accuracy of the electrochemical cell (electrode layered body and frame body) may be likely to vary because of materials to be used. Thus, in the solid oxide electrochemical cell, a gap is usually intentionally formed between the electrode layered body and the frame body. However, if the gap between the electrode layered body and the fame body is excessively large, increase in gas that does not pass through the oxygen electrode or the fuel electrode may decrease a gas utilization rate, causing decrease in power generation performance or electrolysis performance. If the gas supplied to the reaction zone is significantly short of a desired supply, the electrochemical cell may be damaged.

In consideration of the above, an object of an embodiment described below is to provide an electrochemical cell, a current collector, and a cell stack that are capable of reducing unwanted internal stress and/or deformation in the electrochemical cell, which is caused by contact between an electrode layered body including an oxygen electrode, an electrolyte and a fuel electrode, and a member therearound, and also suppressing a gas from passing through a gap between the electrode layered body and the member therearound.

Brief Description of the Drawings

Fig. 1 is a sectional view of a cell stack comprising electrochemical cells according to a first embodiment in a staking direction.
Fig. 2 is a sectional view of the cell stack in the stacking direction corresponding to a II-II line in Fig. 1.
Fig. 3 is a schematic view of the electrochemical cell in the cell stack shown from a III-III line in Fig. 2.
Fig. 4 is a view showing that the electrochemical cell shown in Fig. 1 thermally expands during operation.
Fig. 5 is a view schematically showing an electrochemical cell according to a second embodiment.
Fig. 6 is a view schematically showing an electrochemical cell according to a third embodiment.
Figs. 7(A) to 7(D) are view for describing an example of a manufacturing method of the electrochemical cell according to an embodiment.

Detailed Description of the Invention

In one embodiment, an electrochemical cell comprises: an electrode layered body including an electrolyte having a first surface and a second surface positioned opposite to the first surface, a cathode in contact with the first surface, and an anode in contact with the second surface; and a gas-flow suppression part positioned at least partially adjacent to a side surface of the electrode layered body, (for example, the side surface may be positioned between the first surface and the second surface) wherein the gas-flow suppression part is formed from a material different from those of the electrolyte, the cathode, and the anode.

In one embodiment, a current collector positioned in contact with a cathode or an anode of an electrode layered body of an electrochemical cell in a direction in which an electrolyte, the cathode and the anode of the electrode layered body are stacked, wherein the current collector comprises a gas-flow suppression part positioned at least partially adjacent to a side surface of the electrode layered body.

In one embodiment, a cell stack comprises a plurality of the stacked electrochemical cells.

Respective embodiments are described hereunder with reference to the attached drawings. In the drawings attached to this specification, a scale dimension, an aspect ratio and so on are sometimes changed and exaggerated from the actual ones, for the convenience of easiness in illustration and understanding.

<First Embodiment>

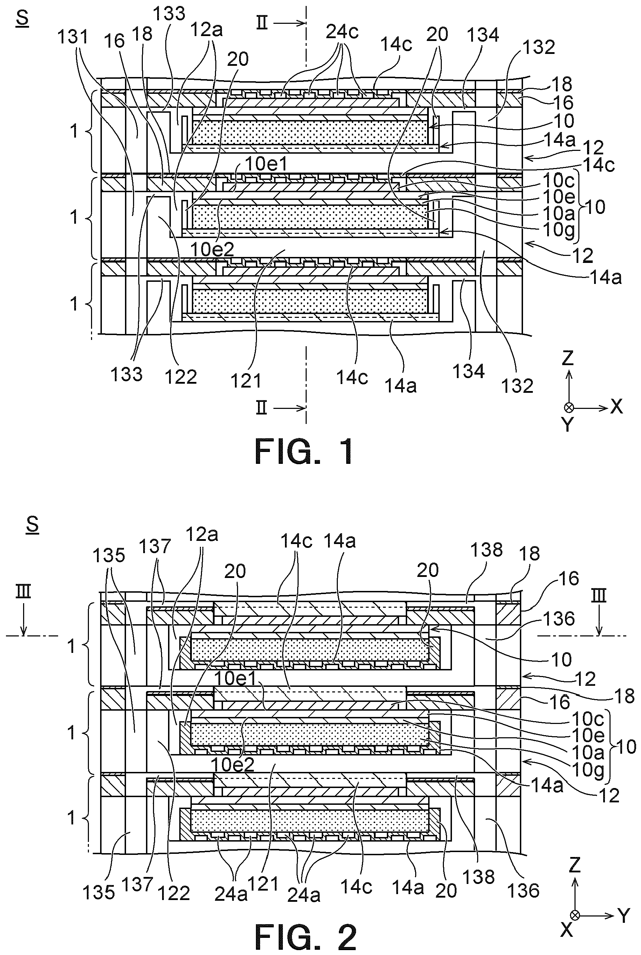

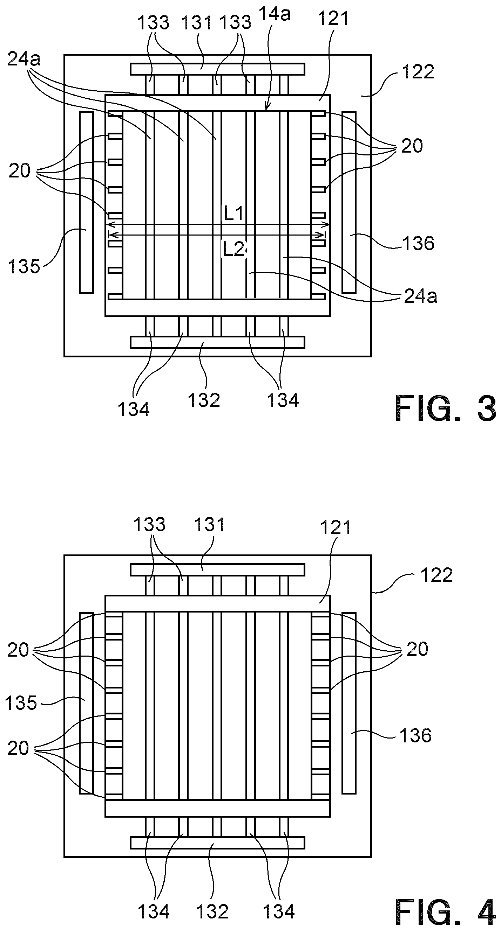

Fig. 1 is a sectional view of a cell stack S comprising electrochemical cells 1 according to a first embodiment in a stacking direction. Fig. 2 is a sectional view of the cell stack S in the stacking direction corresponding to a II-II line in Fig. 1. Fig. 3 is a schematic view of the electrochemical cell 1 in the cell stack shown from a III-III line in Fig. 2. The electrochemical cell 1 has a flat plate shape. In the cell stack 3, a plurality of the electrochemical cells 1 are stacked one on another in their respective thickness directions. Figs. 1 to 3 show the electrochemical cells 1 and the cell stack S which are not operated and thus are at a room temperature (25°C).

A direction in which the electrochemical cells 1 are stacked in the cell stack S is referred to hereunder as stacking direction Z. A direction orthogonal to the stacking direction Z, which extends in the right and left direction in Fig. 1, is referred to as X direction. A direction orthogonal to the stacking direction Z, which extends in the right and left direction in Fig. 2, is referred to as Y direction. The X direction and the Y direction are orthogonal to each other in a plane orthogonal to the stacking direction Z.

A surface of a below-described constituent element of the electrochemical cell 1 or the cell stack S, which is referred to as side surface, means a surface that is an outer surface of the constituent element, which faces the X direction and/or the Y direction. To see in a plan view used herebelow means a view seen in a direction parallel to the stacking direction Z.

As shown in Figs. 1 and 2, the electrochemical cell 1 comprises an electrode layered body 10, a separator 12, an anode side current collector 14a, a cathode side current collector 14c, a sealing plate 16, and a sealant member 18. The electrode layered body 10 is sometimes referred to simply as "cell".

The electrode layered body 10 includes an electrolyte 10e, a cathode 10c, an anode 10a, and an anode porous substrate 10g. The electrolyte 10e has a first surface 10e1 and a second surface 10e2 positioned opposite to the first surface 10e1.

The cathode 10c is in contact with the first surface 10e1. The anode 10a is in contact with the second surface 10e2. The anode porous substrate 10g is in contact with a surface of the anode 10a, which surface is opposite to a surface in contact with the electrolyte 10e. Namely, in the electrode layered body 10, the anode porous substrate 10g, the anode 10a, the electrolyte 10e, and the cathode 10c are stacked in this order from below.

In detail, the electrochemical cell 1 has a flat plate shape which is rectangular in a plan view. However, a shape in a plan view of the electrochemical cell 1 having a flat plate shape is not particularly limited, and may be circular, for example.

The electrolyte 10e in this embodiment is a solid electrolyte and is made of a solid oxide with oxygen ion conductivity. In this case, the electrolyte 10e is formed from, for example, stabilized zirconia or a ceria-based solid solution, or a perovskite-type oxide, which are dense. The electrolyte 10e may be formed from zirconia that is stabilized with an oxide ($Y_2O_3$, $Sc_2O_3$, $Yb_2O_3$, $Gd_2O_3$, CaO, MgO, $CeO_2$) of at least one element selected from the group consisting of Y, Sc, Yb, Gd, Ca, Mg, and Ce. Alternatively, the electrolyte 10e may be formed from ceria doped with an oxide ($Sm_2O_3$, $Gd_2O_3$, $Y_2O_3$) of at least one element selected from the group of Sm, Gd, and Y.

The cathode 10c is porous and is formed from, for example, a perovskite-type oxide. In detail, the cathode 10c may be formed from, for example, LaSrMn oxide, LaSrCo oxide, LaSrCoFe oxide, LaSrFe oxide, etc.

The anode 10a is porous and is formed from, for example, a sintered mixture (cermet) of metal and solid oxide. In detail, the anode 10a may be formed from, for example, Ni-YSZ (yttria stabilized zirconia), Ni-ScSZ (Scandia stabilized zirconia), etc. The fact that the electrolyte 10e is "dense" as described above means that the electrolyte 10e has a porosity that is at least lower than the cathode 10c and the anode 10a which are porous.

The anode porous substrate 10g is also porous and is formed to have a sheet shape. In this embodiment, the anode porous substrate 10g, the anode 10a, the electrolyte 10e, and the cathode 10c are stacked in this order from below and integrated. In this embodiment, the anode porous substrate functions as a support that reinforces and supports the electrode layered body 10.

The electrode layered body 10 may be formed by sequentially depositing, for example, on the anode porous substrate 10g, the anode 10a, the electrolyte 10e, and the cathode 10c. When the electrode layered body 10 is formed by these steps, the anode porous substrate 10g, the anode 10a, the electrolyte 10e, and the cathode 10c are automatically integrated. However, how to form the electrode layered body 10 is not particularly limited.

The anode porous substrate 10g may be formed from a sintered body containing, e.g., metal particles and a metal oxide. The metal particles contained in the sintered body or solidly dissolved in the oxide may be one or more selected from the group consisting of, e.g., nickel (Ni), cobalt (Co), iron (Fe), and copper (Cu), or an alloy containing them.

Since the electrochemical cell 1 according to this embodiment is a sold oxide electrochemical cell, it may be formed from the aforementioned materials that are given by way of example. However, the type of the electrochemical cell 1 is not limited to a solid oxide. When the electrochemical cell 1 is a sold polymer electrochemical cell or a molten carbonate electrochemical cell, each part of the electrochemical cell may be formed from a corresponding material according to the type.

**EP 4 456 211 A2**

The separator 12 comprises a base part 121 overlapped with the electrode layered body 10 in a direction in which the electrolyte 10e, the cathode 10c, and the anode 10a are stacked, i.e., in the stacking direction Z, and a frame body 122 surrounding a side surface of the electrode layered body 10. In this embodiment, a cell housing 12a is formed inside the frame body 122. The electrode layered body 10 is installed in the cell housing 12a. The electrode layered body 10 is installed such that each side of the rectangle is along any of sides of the frame body 122, and that a gap is formed between the side surface of the electrode layered body 10 and the frame body 122. Namely, the electrode layered body 10 is surrounded by the frame body 122 such that the electrode layered body 10 is not in contact with an inner surface of the frame body 122, and that the gap is present between the electrode layered body 10 and the frame body 122.

As shown in Fig. 3, the base part 121 has a rectangular shape in a plan view. The frame body 122 has a rectangular frame shape in a plan view. As shown in Figs. 1 and 2, the base part 121 is in contact with the anode side current collector 14a. The base part 121 is, through its another surface opposite to the surface in contact with the anode side current collector 14a, in contact with the cathode side current collector 14c of another electrochemical cell 1.

The electrochemical cell 1 comprises a plurality of channels through which gases flow. Specifically, as shown in Figs. 1 to 3, the electrochemical cell 1 comprises a fuel supply share channel 131, a fuel discharge share channel 132, a fuel supply branch channel 133, a fuel discharge branch channel 134, an oxygen supply share channel 135, an oxygen discharge share channel 136, an oxygen supply branch channel 137, and an oxygen discharge branch channel 138.

As shown in Fig. 3, the fuel supply share channel 131 is formed in one of two opposed side parts (upper and lower side parts in Fig. 3) of the frame body 122, and the fuel discharge share channel 132 is formed in the other side part of the two side parts. In addition, the oxygen supply share channel 135 is formed one of two opposed other side parts (right and left side parts in Fig. 3) of the fame body 122, and the oxygen discharge share channel 136 is formed in the other side part of the two side parts.

The fuel supply share channel 131, the fuel discharge share channel 132, the oxygen supply share channel 135, and the oxygen discharge share channel 136 respectively pass through the frame body 122 in the stacking direction. As shown in Figs. 1 and 2, the fuel supply share channel 131, the fuel discharge share channel 132, the oxygen supply share channel 135, and the oxygen discharge share channel 136 are fluidically connected respectively to the corresponding fuel supply share channel 131, the fuel discharge share channel 132, the oxygen supply share channel 135, and the oxygen discharge share channel 136 of another electrochemical cell 1.

On the other hand, as shown in Figs. 1 and 3, the fuel supply branch channel 133 is formed adjacent to the fuel supply share channel 131 in the frame body 122. In detail, the fuel supply branch channel 133 is formed in the side part of the frame body 122, in which the fuel supply share channel 131 is formed, to fluidically connect the fuel supply share channel 131 and the cell housing 12a. The fuel discharge branch channel 132 is formed adjacent to the fuel discharge share channel 132 in the frame body 122. In detail, the fuel discharge branch channel 134 is formed in the side part of the frame body 122, in which the fuel discharge share channel 132 is formed, to fluidically connect fuel discharge share channel 132 and the cell housing 12a.

As described above, since the fuel supply share channel 131, the fuel discharge share channel 132, the fuel supply branch channel 133, and the fuel discharge branch channel 134 are connected, a fuel gas flowing through the fuel supply share channel 131 can flow from the fuel supply branch channel 133 into the cell housing 12a. Thus, the fuel gas can be supplied to the anode 10a in the electrode layered body 10. Then, the fuel gas having passed through the electrode layered body 10 can flow from the cell housing 12a to the fuel discharge share channel 132 through the fuel discharge branch channel 134. This allows an unreacted fuel gas to be discharged from the fuel discharge share channel 132.

The fuel supply branch channel 133 and the fuel discharge branch channel 134 are formed in this embodiment as grooves that are recessed from a top surface of the frame body 122 and extend in a direction crossing the stacking direction. However, the fuel supply branch channel 133 and the fuel discharge branch channel 134 may be holes passing through the frame body 122. The oxygen supply branch channel 137 and the oxygen discharge branch channel 138 are provided in the sealing plate 16. Details on this will be described later.

Thus, the separator 12 at least partially forms the channel of a fuel gas to be supplied to the anode 10a and the channel of oxygen to be supplied to the cathode 10c. The separator 12 is formed from an electrically conductive material that is dense enough not to allow a fuel gas and oxygen to transmit therethrough. The separator 12 is formed from, e.g., metal or ceramics. A linear expansion coefficient of the material of the separator 12 is preferably close to a linear expansion coefficient of the electrode layered body 10. The fact that the separator 12 is "dense" as described above means that the separator 12 has a porosity that is at least lower than the cathode 10c and the anode 10a which are porous.

In this embodiment, the frame body 122 is a part of separator 12 and the frame body 122 is upstanding and is integrated with an outer circumferential portion of the base part 121. However, the the frame body 122 and the base part 121 may be separately formed and connected to each other thereafter.

The anode side current collector 14a is located to be in contact with the anode porous substrate 10g and the base part 121 of the separator 12. The cathode side current collector 14c is located to be in contact with the cathode 10c and the separator 12 of another electrochemical cell 1. The anode side current collector 14a may be adhered to the anode porous substrate 10g and the base part 121 of the separator 12 through an adhesive. Similarly, the cathode side current collector 14c may be adhered to the cathode 10c and the separator 12 of another electrochemical cell 1 through an adhesive.

The anode side current collector 14a and the cathode side current collector 14c are electrically conductive sheet-shaped members, and are formed from an electrically conductive material. The anode side current collector 14a and the cathode side current collector 14c may be formed from, for example, stainless steel, iron, nickel, titanium, aluminum, Ag, Pt, Au, or an alloy material including one or more of them. In particular, the anode side current collector 14a and the cathode side current collector 14c may be formed from a gas-diffusive structure. More specifically, the anode side current collector 14a and the cathode side current collector 14c may be formed from a metal mesh, an expanded metal, or a metal foam, which has gas diffusivity and relatively easily deformable. Materials of these mesh, expanded metal and metal foam may be, for example, stainless steel, iron, nickel, titanium, aluminum, Ag, Pt, Au, or an alloy material including one or more of them, similarly to the above. The gas diffusivity is a property that diffuses and transmits a gas flowing thereinto.

As shown in Fig. 2, the anode side current collector 14a is provided with a fuel gas channel 24a. As shown in Fig. 1, the cathode side current collector 14c is provided with an oxygen channel 24c. In this example, the fuel gas channel 24a and the oxygen channel 24c extend orthogonally to each other when seen in the stacking direction Z. However, the patterns of the fuel gas channel 24a and the oxygen channel 24c are not particularly limited.

The anode side current collector 14a is formed to have a corrugated plate shape in which concavities and convexities are repeated. The fuel gas channel 24a is formed between the adjacent convexities of the anode side current collector 14a, which are upwardly convex in Fig. 2, to extend in the X direction. As shown in Figs. 1 and 2, one end of the fuel gas channel 24a in the X direction is fluidically connected to the fuel supply share channel 131 through the cell housing 12a and the fuel supply branch channel 133. The other end of the fuel gas channel 24a in the X direction is fluidically connected to the the fuel discharge share channel 132 through the cell housing 12a and the fuel discharge branch channel 134.

In addition, the cathode side current collector 13c is formed to have a corrugated plate shape in which concavities and convexities are repeated. The oxygen channel 24c is formed between the adjacent concavities of the anode side current collector 14c, which are downwardly concave in Fig. 1, to extend in the Y direction. As shown in Figs. 1 and 2, one end of the oxygen channel 24c in the Y direction is fluidically connected to the oxygen supply share channel 135 through the oxygen supply branch channel 137. The other end of the oxygen channel 24c in the Y direction is fluidically connected to the oxygen discharge share channel 136 through the oxygen discharge branch channel 138.

Note that the anode side current collector 14a and the cathode side current collector 14c may not be provided with the aforementioned fuel gas channel 24a and the oxygen channel 24c. In this case, for example, the anode side current collector 14a and the cathode side current collector 14c is formed from a porous material, and the separator 12 may have groove-shaped channels formed therein, which are similar to the fuel gas channel 24a and the oxygen channel 24c.

In this embodiment, a size of the cathode 10c is smaller than that of the electrolyte 10e in a plan view, so that an outer circumferential portion of the electrolyte 10e is not covered with the cathode 10c. The sealing plate 16 is installed in straddling a surface of the electrolyte 10e in which the cathode 10c is not positioned, and the top surface of the frame body 122. The sealing plate 16 is a rectangular frame-shaped plate member which surrounds the cathode 10c and the cathode side current collector 14c. Oxygen to be supplied to the cathode 10c can flow into an inside space of the sealing plate 16. The sealing plate 16 separates the inside space of sealing plate 16 and a gas atmosphere of the cell housing 12a.

As described above, the oxygen supply branch channel 137 and the oxygen discharge branch channel 138 are formed in the sealing plate 16. In detail, as shown in Fig. 2, the oxygen supply branch channel 137 is formed to fluidically connect the oxygen supply share channel 135 and the inside space of sealing plate 16. The oxygen discharge branch channel 138 is formed to fluidically connect the oxygen discharge share channel 136 and the inside space of sealing plate 16. The sealing plate 16 is formed from a dense material such as metal or ceramics. The sealing plate 16 may be formed from the same material as the separator 12.

The sealant member 18 is provided between the sealing plate 16 and the separator 12 of another electrochemical cell 1 to air-tightly and liquid-tightly seal a space between the sealing plate 16 and the separator 12 of another electrochemical cell 1. The sealant member 18 may be formed from a compressive material that deforms when pressurized.

The electrochemical cell 1 according to this embodiment constitutes a single unit, so-called single cell by the aforementioned electrode layered body 10, the separator 12, the anode side current collector 14a, the cathode side current collector 14c, the sealing plate 16, and the sealant member 18. The cell stack S is formed by stacking such electrochemical cells 1 the number of which is optional. End plates (illustration omitted) or the like are located on both ends of the cell stack S in the stacking direction Z. The pair of end plates or the like are fastened and secured by fastening means, such as a plurality of bolts and nuts (illustration omitted).

Here, as shown in Figs. 1 to 3, the electrochemical cell 1 comprises a gas-flow suppression part[s] 20. The gas-flow suppression part 20 is positioned at least partially adjacent to the side surface of the electrode layered body 10. In detail, the gas-flow suppression part 20 according to this embodiment is positioned partially adjacent to side surface of a part consisting of the anode porous substrate 10g, the anode 10a, the electrolyte 10e of the electrode layered body 10, but is not adjacent to the cathode 10c.

As described above, the gap is formed between the side surface of the electrode layered body 10 and the frame body 122. The gas-flow suppression part 20 is positioned in the gap between the side surface of the electrode layered body 10 and the frame body 12 in order to block the flow of fuel gas that is going to flow through the gap between the side surface of the electrode layered body 10 and the fame body 122.

The gas-flow suppression part 20 is formed from a material different from those of the electrolyte 10e, the cathode 10c, and the anode 10a. In detail, the gas-flow suppression part 20 is formed from a material having a linear expansion coefficient greater than linear expansion coefficients of the electrolyte 10e, the cathode 10c, and the anode 10a. As described above, in this embodiment, the electrolyte 10e, the cathode 10c, and the anode 10a are mainly formed from ceramics. On the other hand, the gas-flow suppression part 20 may be formed from, for example, stainless steel, iron, nickel, titanium, aluminum, Ag, Pt, Au, or an alloy material including one or more of them. This allows the linear expansion coefficient of the gas-flow suppression part 20 to be greater than the linear expansion coefficients of the electrolyte 10e, the cathode 10c, and the anode 10a.

In detail, the gas-flow suppression part 20 is formed integrally with the anode side current corrector 14a formed from metal in this embodiment. Namely, the anode side current side current collector 14a comprises the gas-flow suppression part 20 positioned at least partially adjacent to the side surface of the electrode layered body 10. In this embodiment, since the anode side current collector 14a is integrated with the electrode layered body 10, the gas-flow suppression part 20 is integrated with the electrode layered body 10. The gas-flow suppression part 20 may not be integrated with the anode side current collector 14a, but may be integrated with the anode porous substrate 10g. In this embodiment, the gas-flow suppression part 20 is formed from a material similar to that of the anode side current collector 14a. Thus, the gas-flow suppression part 20 may be formed from a gas-diffusive structure. More specifically, the gas-flow suppression part 20 may be formed from a metal mesh, an expanded metal, or a metal foam, which is gas diffusive and relatively easily deformable.

As shown in Figs. 2 and 3, the gas-flow suppression part 20 is positioned apart from the frame body 122 when the electrochemical cell 1 is not operated and thus is at a room temperature (25°C), for example. When the linear expansion coefficient of the gas-flow suppression part 20 is greater than the linear expansion coefficients of the electrolyte 10e, the cathode 10c, and the anode 10a, the gas-flow suppression part 20 can easily expand toward the frame body 122 such that a distance between the gas-flow suppression part 20 and the fame body 122 decreases, during operation of the electrochemical cell 1. This makes it easier to block the flow of fuel gas flowing through the gap between the electrode layered body 10 and the fame body 122. In addition, it is very time-consuming to property form, with good machining accuracy, a member such as the gas-flow suppression part 20, which blocks the flow of fuel gas as described above, from the same material as that of the electrode layered body 10 mainly made of ceramics. Thus, to form the gas-flow suppression part 20 from a material different from those of the electrolyte 10e, the cathode 10c, and the anode 10a may be advantageous in terms of machining of the gas-flow suppression part 20.

In detail, as shown in Fig. 4, the gas-flow suppression part 20 in this embodiment has a convex shape projecting from the electrode layered body 10 toward the fame body 122. For example, the gas-flow suppression part 20 is formed as a rectangular plate having a constant thickness, with its plate plane being along the stacking direction Z. In this embodiment, a plurality of the gas-flow suppression parts 20 are provided at intervals therebetween along a direction surrounding the side surface of the electrode layered body 10. In detail, the gas-flow suppression parts 20 are provided at intervals therebetween along parts of the side surface of the electrode layered body 10, which are parallel to the fuel gas channel 24 of the anode current collector 14a.

The adjacent gas-flow suppression parts 20 are preferably apart from each other by some distance, in order that a fuel gas flowing into therebetween to rapidly contract and expand so as to generate pressure loss. In addition, the gas-flow suppression parts 20 are preferably configured such that, when a flow gas flows into a space between the adjacent gas-flow suppression parts 20, a vortex is generated.

Further, this embodiment intends that the gas-flow suppression part 20 expands toward the frame body 122 such that the distance between the gas-flow suppression part 20 and the frame body 122 decreases, when the electrochemical cell 1 is operated. Namely, the gas-flow suppression part 20 is configured to come into contact with or come close to the frame body 122 by thermal expansion, when reaching or exceeding a predetermined temperature.

Specifically, the gas-flow suppression part 20 is positioned in the gap between the electrode layered body 10 and the frame body 122 in such a manner that the gas-flow suppression part 20 is apart from the frame body 122, when the electrochemical cell 1 is not operated and thus is at a room temperature (25°C), in other words, when it is assembled. As described above, the linear expansion coefficient of the gas-flow suppression part 20 is set such that it is greater than the linear expansion coefficients of the electrolyte 10e, the cathode 10c, and the anode 10a, and is also greater than a linear expansion coefficient of the frame body 122. In detail, for example, the linear expansion coefficient of the gas-flow suppression part 20 and the linear expansion coefficient of the frame body 122 are set such that a difference between a dimension of the expanded gas-flow suppression part 20 at a predetermined temperature and a dimension of the expanded frame body 122 at the predetermined temperature is equal to or greater than a distance between the gas-flow suppression part 20 and the frame body 122 at a room temperature. As shown in Fig. 4, this allows the gas-flow suppression part 20 to be in contact with the frame body 122 by thermal expansion, when reaching or exceeding the predetermined temperature.

This is described in detail with reference to Fig. 3. A reference numeral L1 in Fig. 3 indicates a distance between opposed inner surfaces of the frame body 122. A reference numeral L2 indicates a distance between distal ends of the gas-flow suppression parts 20 provided on the opposed edges of the anode current collector 14a. A distance between the gas-flow suppression part 10 and the frame body 122 at a room temperature is calculated by ((L1-L2)/2). In this embodiment, the linear expansion coefficient of the gas-flow suppression part 20 and the linear expansion coefficient of the frame body 122 are set such that the following relationship holds:

$$((L1-L2)/2) - (c1 \times L1 - c2 \times L2) \times (Td-Ts) \geq 0$$

wherein c1 represents the linear expansion coefficient of the frame body 122, c2 represents the linear expansion coefficient of the gas-flow suppression part 20, Td represents the predetermined temperature, and Ts represents the room temperature.

As described above, the gas-flow suppression part 20 is thermally expanded to come into contact with the frame body 122. In this case, the gas-flow suppression part 20 is preferably configured to be deformed or easily buckled so as not to constrain deformation of the electrode layered body 10 or not to transmit load to the electrode layered body 10, even when the gas-flow suppression part 20 comes into contact with the frame body 122 at a high-temperature operation state. From this point of view, the gas-flow suppression part 20 is preferably formed from a structure such as a metal mesh, an expanded metal, or a metal foam, which is gas diffusive and relatively easily deformable. For example, a nickel foam is particularly preferred.

In addition, since the the gas-flow suppression part 20 is apart from the frame body 122 when the electrochemical cell 1 is not operated and thus is at a room temperature (25°C), in other words, when it is assembled, the gas-flow suppression part 20 does not interfere with the assembly of the frame body 122 and the electrode layered body 10. In addition, in this embodiment, as shown in Figs. 1 and 2, the top surface of the gas-flow suppression part 20 (surface facing sealing plate 16) is also positioned apart from the sealing plate 16 when the electrochemical cell 1 is not operated and thus is at a room temperature (25°C). The top surface of the gas-flow suppression part 20 is preferably formed apart from the sealing plate 16, in other words, formed not to exceed the electrolyte 10e, in order to avoid affecting proper assembly. On the other hand, although the top surface of the gas-flow suppression part 20 is apart from the sealing plate 16, the gas-flow suppression part 20 can come close to the sealing plate 16 by thermal expansion at a high temperature. This can suitably suppress the fuel gas from flowing.

Next, an operation of the electrochemical cell 1 according to this embodiment is described.

When the cell stack S is operated as an SOEC (solid oxide electrochemical cell), a fuel gas is introduced from outside to the fuel supply share channel 131. The fuel gas for the SOEC may be a gas containing at least water vapor or carbon dioxide. The fuel gas flows from the fuel supply branch cannel 133 into the cell housing 12a. The fuel gas passes through the fuel gas channel 24a of the anode side current collector 14a, and is diffused here by the anode porous substrate 10g. Then, the fuel gas is supplied to the anode 10a of the electrode layered body 10. Thus, the fuel gas is used as a reactant for an electrolysis reaction in the electrode layered body 10. The fuel gas, which was not used as a reactant for the electrolysis reaction, is discharged outside through the fuel supply branch channel 133 and the fuel discharge branch channel 134.

In this embodiment, since a gap is formed between the electrode layered body 10 and the frame body 122, the fuel gas is going to pass through the gap. However, the provision of the gas-flow suppression part 20 can suppress the fuel gas from flowing through the gap. Particularly in this embodiment, when the electrochemical cell 1 is operated, the gas-flow suppression part 20 thermally expands toward the frame body 122 such that the gap between the gas-flow suppression part 20 and the frame body 122 decreases, so that the gas-flow suppression part 20 comes into contact with or comes close to the frame body 122. This can improve seal performance.

In this embodiment, since the electrolyte 10e is a solid oxide, it is difficult to tightly contact the electrode layered body 10 and the frame body 122, whereby a gap is formed between the electrode layered body 10 and the frame body 122. The gas-flow suppression part 20, which is produced by a material different from that of the electrode layered body 10 in this embodiment, can easily provide a desired seal function. In detail, since the gas-flow suppression part 20 is produced from, e.g., a metal with improved processability, it is easy to produce the gas-flow suppression part 20 having a size or a dimension that does not allow contact with the frame body 122 can be easily produced, or the gas-flow suppression part 20 which does not cause unwanted deformation or internal stress in the electrode layered body 10 even when it comes into contact with the frame body 122. This can effectively provide seal performance.

Also when the cell stack S is operated as an SOEC (solid oxide electrochemical cell), the gas-flow suppression part 20 can effectively provide seal performance, similarly to the above.

As described above, the electrochemical cell 1 according to this embodiment comprises the electrode layered body 10 including the electrolyte 10e having the first surface 10e1 and the second surface 10e2 positioned opposite to the first surface 10e1, the cathode in contact with the first surface 10e1, and the anode 10a in contact with the second surface 10e2; and the gas-flow suppression part 20 that is positioned at least partially adjacent to a side surface of the electrode layered body 10, and is formed from a material different from those of the electrolyte 10e, the cathode 10c, and the anode 10a.

Due to the above structure, even when the electrode layered body 10 is surrounded by the frame body 122 with a gap therebetween, the electrochemical cell 1 can suppress the fuel gas from flowing through the gap by means of the gas-flow suppression part 20. The gas-flow suppression part 20 is produced from a material different from that of the electrode layered body 10, e.g., a metal with improved processability. Thus, it is easy to produce the gas-flow suppression part 20 having a size or a dimension that does not allow contact with the frame body 122 can be easily produced, or the gas-flow suppression part 20 which does not cause unwanted deformation or internal stress in the electrode layered body 10 even when it comes into contact with the frame body 122. As a result, the electrochemical cell 1 according to this embodiment can suppress the gas from flowing through between the electrode layered body 10 and the frame body 122 surrounding the same, while suppressing unwanted internal stress and deformation of the electrochemical cell 1 caused by contact between the electrode layered body 10 and the frame body 122 surrounding the same.

<Second Embodiment>

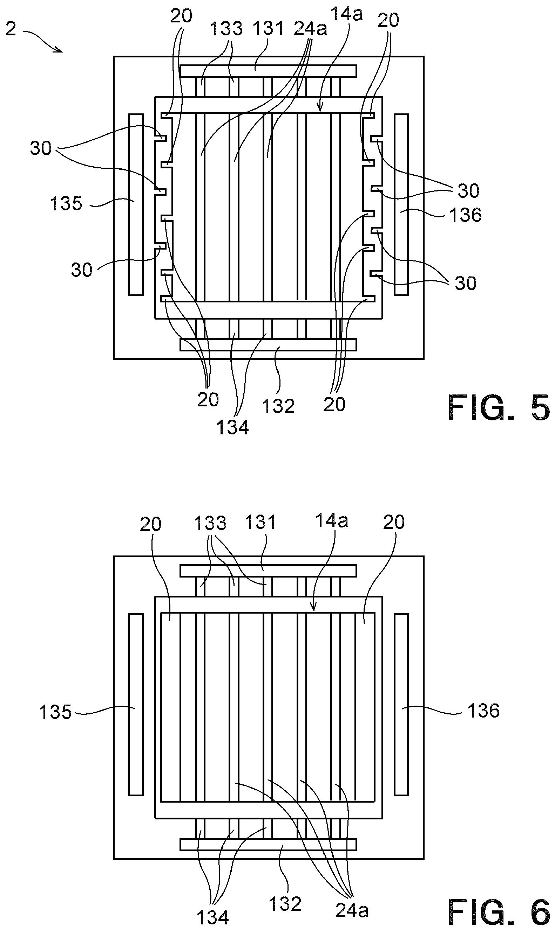

Next, an electrochemical cell 2 according to a second embodiment is described with reference to Fig. 5. The same constituent element of the second embodiment as that of the first embodiment has the same reference numeral, and redundant description is omitted.

As shown in Fig. 5 a frame body 122 in this embodiment has a plurality of convexities 30 projecting toward an electrode layered body 10. Each convexity 30 projects toward parts of a side surface of the electrode layered body 10, in which gas-flow suppression parts 20 are adjacent. The convexity 30 is formed such that its distal end is apart from the side surface of the electrode layered body 10. In this embodiment, for example, the convexity 30 is formed as a rectangular plate having a constant thickness, with its plate plane being along a stacking direction Z.

In addition, in this embodiment, the gas-flow suppression parts 20 and the convexities 30 are alternated. The convexity 30 is positioned to block a fuel gas passing through between the distal end of the gas-flow suppression part 20 and the frame body 122. Namely, the convexity 30 has a function of preventing a gas from blowing therethrough. Since the gas-flow suppression parts 20 and the convexities 30 are alternated, the fuel gas passing through the distal end of the gas-flow suppression part 20 and the frame body 122 may repeat rapid contraction and rapid expansion in succeeding spaces between the adjacent gas-flow suppression parts 20 and the convexities 30 to generate pressure loss. This can effectively suppress the fuel gas from flowing through the gap between the gas-flow suppression parts 20 and the frame body 122. The space between the adjacent gas-flow suppression part 20 and the convexity 30 is preferably configured to generate a vortex when the fuel gas flows thereinto.

Also in this embodiment, similarly to the first embodiment, the gas-flow suppression part 20, which is apart from the frame body 122 at a room temperature, is configured to come into contact with or come close to the frame body 122 by thermal expansion, when reaching or exceeding a predetermined temperature. In this embodiment, even if the gas-flow suppression part 20 does not come into contact with the frame body 122 upon temperature rise, the convexity 30 can block the flow of fuel gas. This can improve seal performance.

<Third Embodiment>

Next, an electrochemical cell 3 according to a third embodiment is described with reference to Fig. 6. The same constituent element of the third embodiment as that of the first and second embodiments has the same reference numeral, and redundant description is omitted.

As shown in Fig. 6, in the electrochemical cell 1 in this embodiment, a gas-flow suppression part 20 covers a side surface of an electrode layered body 10 over a wide range. Namely, the gas-flow suppression part 20 is formed to have a wall shape extending in a direction surrounding the side surface of the electrode layered body 10. In detail, the gas-flow suppression part 20 is formed to partially or entirely cover a part of the side surface of the electrode layered body 10, which extends from a fuel supply share channel 131 toward a fuel discharge share channel 132.

In this embodiment, the gas-flow suppression part 20 is positioned apart from the frame body 122 when the electrochemical cell 1 is not operated and thus is at a room temperature (25°C), for example, and is also maintained to be apart from the frame body 122 when the electrochemical 3 is operated. However, as in the first embodiment, the gas-flow suppression part 20 in this embodiment may be configured to come into contact with or come close to the frame body 122 by thermal expansion, when reaching or exceeding a predetermined temperature.

This embodiment can also suppress a fuel gas from flowing through a gap between the electrode layered body 10 and the frame body 122.

<Manufacturing Method of Electrochemical Cell>

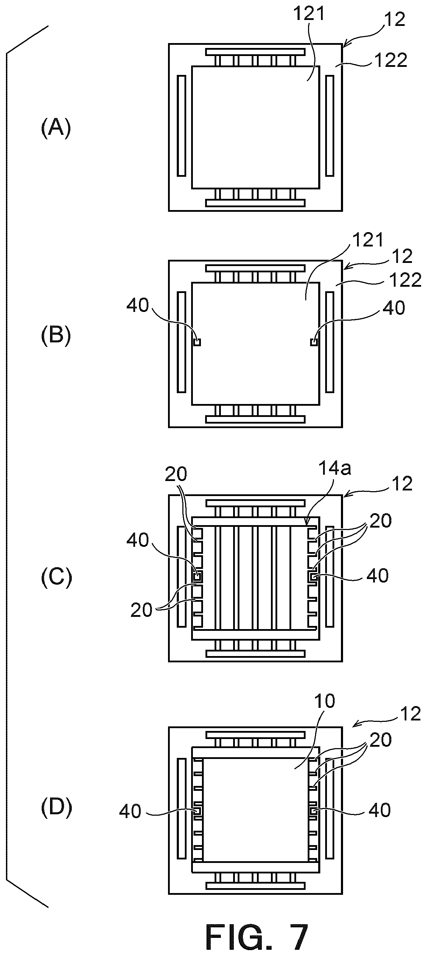

An example of the manufacturing method is described below with reference to Fig. 7. Although Fig. 7 shows a manufacturing procedure of the electrochemical cell 1 according to the first embodiment, the electrochemical cells according to the second and third embodiments can also be manufactured by the similar procedure.

In the example described here, an assembly jig 40 is used for forming a desired gap between the electrode layered body 10, in particular, the gas-flow suppression part 20, and the frame body 122. The assembly jig 40 may be, for example, a rectangular block formed to have a dimension slightly smaller than the desired gap between the electrode layered body 10 and the frame body 122.

As shown in Fig. 7(A), the separator 12 is prepared first. Thereafter, as shown in Fig. 7(B), the assembly jig 40 is installed on the base part 121 of the separator 12. At this time, at least two assembly jigs 40 are located such that they are close to the respective two opposed sides of the frame body 122. The aforementioned two sides of the frame body 122 are sides that are respectively opposed to the gas-flow suppression parts 20, after assembly.

Following thereto, the anode side current collector 14a is placed on the base part 121 so as not to come into contact with the assembly jigs 40. Under this state, the anode side current collector 14a is adhered to the base part 121 by an adhesive or the like. Thus, the anode side current collector 14a is secured at a predetermined position, and a desired distance between the gas-flow suppression part 20 integral with the anode side current collector 14a and the frame body 122 is obtained.

Thereafter, the electrode layered body 10 is placed on the anode side current collector 14a so as not to come into contact with the assembly jigs 40 and the gas-flow suppression parts 20. Under this state, the electrode layered body 10 is adhered to the anode side current collector 14a by an adhesive or the like. Thus, the electrode layered body 10 is secured at a predetermined position, and a desired gap between the electrode layered body 10 and the frame body 122 is obtained. This allows the gas-flow suppressions 20 to properly function. After that, the assembly jigs 40 are puled out for removal.

The above description of each embodiment is presented as an example and is not intended to limit the scope of the present invention. The novel embodiments can be implemented in various other way, and various omissions, substitutions, and modifications can be made to the extent that they do not depart from the gist of the present invention. The aforementioned embodiments and other variations are included in the scope and gist of the present invention, as well as in the present invention described in the claims and its equivalents.

For example, the gas-flow suppression part 20 in the above first and second embodiments has a plate-like shape having a constant thickness, but the gas-flow suppression part 20 may be tapered toward the frame body 122. Alternatively, the gas-flow suppression part 20 may have a block shape.

In addition, although the gas-flow suppression part 20 in the above first to third embodiments is configured to suppress flow of fuel gas, the gas-flow suppression part 20 may be used to suppress flow of oxygen. In this case, the gas-flow suppression part 20 is located between the cathode 10c and the sealing plate 16. In this case, the gas-flow suppression part 20 may be integrated with the cathode side current collector 14.

## Claims

1. An electrochemical cell comprising:

    an electrode layered body including an electrolyte having a first surface and a second surface positioned opposite to the first surface, a cathode in contact with the first surface, and an anode in contact with the second surface; and a gas-flow suppression part that is positioned at least partially adjacent to a side surface of the electrode layered body, and is formed from a material different from those of the electrolyte, the cathode, and the anode.

2. The electromechanical cell according to claim 1, wherein
the gas-flow suppression part is integrated with the electrode layered body.

3. The electrochemical cell according to claim 1, wherein

the gas-flow suppression part is formed from a material having a liner expansion coefficient larger than those of the electrolyte, the cathode, and the anode.

4. The electrochemical cell according to claim 1, wherein
the gas-flow suppression part comprises a gas-diffusive metal.

5. The electrochemical cell according to claim 1, wherein:

the electrochemical cell comprises a plurality of the gas-flow suppression parts; and
the gas-flow suppression parts are provided at intervals therebetween along a direction surrounding the side surface of the electrode layered body.

6. The electrochemical cell according to claim 1,
the gas-flow suppression part is formed to have a wall shape extending in a direction surrounding the side surface of the electrode layered body.

7. The electrochemical cell according to Claim 1, comprising a sheet-shaped member in contact with the cathode or the anode, in a direction in which the electrolyte, the cathode, and the anode are stacked,
wherein the sheet-shaped member and the gas-flow suppression part are integrated.

8. The electrochemical cell according to Claim 7, wherein
the sheet-shaped member and the gas-flow suppression part comprise a gas-diffusive metal.

9. The electrochemical cell according to claim 7 or 8, wherein
the sheet-shaped member is electrically conductive, and functions as a current collector.

10. The electrochemical cell according to claim 1, comprising:

a separator including a base part overlapped with the electrode layered body in a direction in which the electrolyte, the cathode, and the anode are stacked; and
a frame body surrounding the side surface of the electrode layered body;
wherein a gap is formed between the side surface of the electrode layered body and the frame body, and
wherein the gas-flow suppression part is positioned in the gap in such a manner that the gas-flow suppression part is at least partially adjacent to the side surface of the electrode layered body and is apart from the frame body.

11. The electrochemical cell according to claim 10, wherein
when reaching or exceeding a predetermined temperature, the gas-flow suppression part comes into contact with or comes close to the frame body by thermal expansion.

12. The electrochemical cell according to claim 10, wherein
a linear expansion coefficient of the gas-flow suppression part is larger than that of the frame body.

13. The electrochemical cell according to claim 10, wherein:

the frame body comprises a plurality of convexities projecting toward the electrode layered body; and
the gas-flow suppression parts and the convexities are alternated with each other.

14. The electrochemical cell according to claim 10, wherein
the frame body is a part of the separator, and is integrated with an outer circumferential portion of the base part.

15. The electrochemical cell according to claim 1, wherein
the electrolyte is a solid electrolyte.

16. A current collector positioned in contact with a cathode or an anode of an electrode layered body of an electrochemical cell in a direction in which an electrolyte, the cathode and the anode of the electrode layered body are stacked,
wherein the current collector comprises a gas-flow suppression part positioned at least partially adjacent to a side surface of the electrode layered body.

**17.** A cell stack comprising a plurality of the stacked electrochemical cells according to claim 1.

FIG. 1

FIG. 2

FIG. 3

FIG. 4

FIG. 5

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023043298 A